# FASCICULE DE BREVET EUROPEEN

(11) **EP 2 320 195 B1**
(45) Date de publication et mention de la délivrance du brevet: **08.01.2014**
(21) Numéro de dépôt: 10189771.8
(22) Date de dépôt: 03.11.2010
(51) Int. Cl.: G01C 25/00, G01P 21/00, H04M 1/00

(54) **Procédé et dispositif de calibration d'un capteur MEMS d'une carte à microcircuit(s) dans un dispositif élèctronique hôte de poche ou portable**
Kalibrierungsverfahren und -vorrichtung für einen MEMS-Sensor einer Mikroschaltung in einer tragbaren elektronischen Vorrichtung
Calibration method of and calibration device for a MEMS sensor of a microcircuit board in a portable electronic device

(30) Priorité: 06.11.2009 FR 0905347
(43) Date de publication de la demande: 11.05.2011
(73) Titulaire: Oberthur Technologies, 92300 Levallois-Perret (FR)
(72) Inventeur: Guitard, Vincent, 78400 CHATOU (FR)
(74) Mandataire: Esselin, Sophie

(56) Documents cités:
- US-A1- 2007 270 721
- US-A1- 2008 254 822

## Description

### DOMAINE DE L'INVENTION

La présente invention concerne la calibration d'un capteur MEMS d'une carte à microcircuit, et plus spécialement un procédé de calibration de ce capteur qui est mis en oeuvre alors que la carte est placée, opérationnelle, dans un dispositif électronique hôte de poche ou portable.

### ETAT DE L'ART

Les cartes à microcircuit sont d'utilisation courante dans des dispositifs électroniques hôtes de poche ou portable, en particulier pour assurer des fonctions de contrôle d'accès sécurisé à des services proposés par le dispositif hôte. Un exemple bien connu est la carte appelée carte SIM, qui utilisée en lien avec un téléphone portable qui permet à son utilisateur, d'accéder au réseau de téléphonie via un fournisseur d'accès. Elle peut être utilisée dans d'autres dispositifs hôtes, par exemple dans des clefs USB. D'autres formats de cartes à microcircuit sont aussi utilisés, comme le format de cartes bancaires.

Outre les fonctions de contrôle d'accès sécurisé, ces cartes proposent généralement d'autres fonctions ou applications, qui s'ajoutent à celles du dispositif hôte de la carte. Ces fonctionnalités propres à la carte sont d'un accès difficile pour l'utilisateur, car le chemin d'accès est plus enfoui que l'accès aux fonctionnalités du dispositif hôte, et qu'il est variable d'un dispositif hôte à un autre.

Cet accès non aisé aux fonctionnalités de la carte à microcircuit peut être amélioré par l'intégration de capteur(s) à accéléromètre(s) dans la carte, pour réaliser une interface utilisateur plus intuitive avec cette carte, basée sur la détection d'un mouvement ou d'une position, par exemple une inclinaison. On a alors un accès facilité aux fonctionnalités propres à la carte, la détection d'un mouvement ou d'une position par le capteur de la carte provoquant par exemple l'émission d'un affichage, ou d'un message sonore pour l'utilisateur : de cette façon, on remonte une ou des fonctionnalités de la carte en sorte qu'elles soient ainsi proposées directement à l'utilisateur, via l'interface utilisateur du dispositif hôte. L'utilisateur peut alors, à sa guise, activer ou non les fonctionnalités de la carte qui lui sont proposées "spontanément".

En pratique, les capteurs de mouvement utilisés sont comparables à ceux déjà utilisés dans les téléphones portables, organiseurs ou autres dispositifs électroniques de poche ou portables, comme décrit par exemple dans la demande de brevet US2008/0254822 : un dispositif portable contient des capteurs de mouvements utilisés pour détecter son mode d'utilisation courant, en fonction des données d'orientation spatiales recueillies par ces capteurs, notamment pour gérer au mieux la consommation d'énergie. Elle suppose une calibration appropriée relativement à un point de référence ou une orientation connue, en usine, par l'utilisateur des 3 axes d'orientation de référence du dispositif portable.

Par exemple, ce peut être un accéléromètre à un, deux ou trois axes. Ce peut être un inclinomètre, soit typiquement un capteur à deux accéléromètres associé à un microprocesseur qui calcule une inclinaison à partir des mesures d'accélération. D'autres capteurs peuvent être intégrés dans la carte pour offrir d'autres fonctionnalités ou applications. Par exemple, un capteur de pression peut être prévu, notamment pour des fonctionnalités d'altimètre.

L'intégration de tels capteurs dans les cartes à microcircuits, qui ont la particularité d'être très minces, est possible, en utilisant des capteurs MEMS, à micro ou nano systèmes électromécaniques, à encombrement réduit, grande sensibilité et faible consommation, montés à nu dans l'épaisseur de ces cartes, c'est-à-dire sous forme de puce, non encore encapsulée dans un boitier. L'encapsulation de la puce de capteur est ainsi assurée par la carte elle-même, dans son épaisseur, utilisant les techniques d'encapsulation éprouvées dans ce domaine.

Les capteurs MEMS du commerce, en boitier, sont habituellement calibrés en usine, pour déterminer des valeurs de réglage de leurs caractéristiques de réponse. Si on prend en exemple les capteurs MEMS à accéléromètre(s), ces capteurs sont calibrés sur chaque axe de mesure avec une valeur de réglage de l'offset, pour que le capteur fournisse une valeur nulle d'accélération (0g) en réponse à une accélération nulle, et une valeur de réglage du gain, pour que le capteur ait la sensibilité attendue. Ces capteurs contiennent ainsi des registres contenant des valeurs de réglage ("trimming values") d'offset et de gain qui sont utilisées en interne du capteur, ou par un microprocesseur externe, dans un algorithme de correction qui corrige la mesure sur chaque axe. A titre d'exemple, on peut citer l'accéléromètre triaxe MEMS commercialisé par la société STMICROELECTRONICS sous la référence LIS3LV02DQ, qui contient ainsi une mémoire non volatile contenant les valeurs usine de réglage de l'offset et du gain sur chaque axe. Ces valeurs de réglage sont chargées à chaque mise sous tension dans des registres de réglage du capteur, pour être utilisées par un algorithme de correction mis en oeuvre dans le capteur, pour fournir des mesures corrigées en sortie.

Cette calibration en sortie d'usine est nécessaire, compte-tenu des différentes contraintes mécaniques qui peuvent s'exercer au cours de la fabrication des éléments sensibles de ces capteurs, qui sont de petites dimensions, et utilisent généralement une ou des membranes ou poutres micro usinées, dont le déplacement, la vibration ou la déformation est la grandeur physique à la base de la mesure qu'ils délivrent.

On comprend que l'intégration à nu de ces capteurs dans une carte à microcircuit, nécessite de prévoir une calibration supplémentaire en fin de fabrication des cartes, pour corriger les effets propres aux contraintes mécaniques de fabrication et d'encapsulation dans la carte (montage et collage de la puce de capteur sur une couche support intermédiaire, réalisation des connexions, encartage, découpe des cartes...). Cette calibration sera semblable en ses principes à la calibration réalisée en sortie d'usine sur les capteurs en boitiers. Cette correction à appliquer aux mesures du capteur d'une carte à microcircuit(s) s'ajoute le cas échéant à la calibration déjà opérée en interne par le capteur, sur la base des valeurs de réglage usine. Pour déterminer la correction de gain supplémentaire à appliquer aux mesures fournies par le capteur, la carte doit connaitre le gain (ou la sensibilité) attendu G₀ du capteur. Ceci est facilement réalisable en intégrant cette valeur de référence de gain du capteur dans le flot de données de personnalisation de la carte, qui est programmé dans la phase de personnalisation électrique, en fin de fabrication. La calibration est réalisée en utilisant cette valeur de référence. La carte dispose alors de valeurs de réglage du capteur qui viennent corriger les effets des contraintes mécaniques liées à l'intégration du capteur dans la carte. Cette correction s'ajoute à celle déjà opérée le cas échéant en interne dans le capteur, sur la base des valeurs de réglage usine. On peut aussi prévoir une unique calibration du capteur, en fin de fabrication de la carte, pour obtenir les valeurs de réglage du capteur qui pourront aussi être utilisées dans un algorithme de correction mis en oeuvre par la carte, appliqué aux mesures fournies par le capteur. Dans une telle variante, il est aussi possible de prévoir que le capteur intègre des registres de réglage qui peuvent être initialisés avec les valeurs de réglage déterminées par la carte, avec un algorithme de correction implémenté en interne dans le capteur.

Ainsi, on sait intégrer un capteur à nu dans une carte, et le calibrer dans cette carte. Mais une fois la carte fabriquée et mise en vente, d'autres contraintes mécaniques vont s'exercer qui sont liées à la nature, portable, de ces cartes et à leurs utilisations. Notamment ces cartes sont amenées à être manipulées, notamment distribuées dans les points de vente où elles sont manipulées par les vendeurs. Elles sont par ailleurs destinées à être insérées dans un dispositif hôte, par exemple un téléphone, une clef USB, un organiseur (PDA)......Si on prend l'exemple des cartes SIM, ces cartes sont vendues dans un support dont elles sont détachables : il faut alors détacher la carte de son support avant de la placer dans son dispositif hôte (téléphone, clef USB par exemple), ce qui se fait en exerçant une pression mécanique forte, généralement avec les doigts, sur cette carte. Elle doit ensuite être insérée et bloquée mécaniquement dans le dispositif hôte. Cette opération exerce des torsions et forces mécaniques importantes sur la carte. En outre, l'évolution technologique et l'offre correspondante sur le marché de produits toujours plus innovants, conduisent certains utilisateurs à changer très souvent de matériel, pour suivre cette évolution. La carte elle ne change pas pour autant. Il faut alors enlever la carte de l'ancien matériel hôte, ce qui ne se fait pas sans exercer des efforts sur la carte, pour à nouveau l'insérer et la bloquer dans un nouveau dispositif hôte.

Toutes ces manipulations des cartes à microcircuit, liées à leur utilisation, amènent des contraintes mécaniques. Compte tenu notamment de la souplesse de ces cartes, ces contraintes ne sont pas sans effets sur la réponse de(s) capteur(s) MEMS qu'elle contient. Les valeurs de réglage du capteur ne sont plus correctes. La carte dispose alors de mesures qui peuvent être biaisées, ou moins précises, ce qui peut être gênant selon l'application visée.

### RESUME DE L'INVENTION

L'invention apporte une solution à ce problème technique en permettant une nouvelle calibration d'un capteur MEMS d'une carte à microcircuit(s) d'un dispositif électronique hôte de poche ou portable, à interface utilisateur, basée sur une utilisation judicieuse de cette interface utilisateur, pour inviter un utilisateur à procéder à une calibration d'au moins une caractéristique du capteur. L'utilisateur est ensuite invité par la carte, toujours via cette interface utilisateur à suivre des instructions pour procéder à une calibration du capteur.

L'invention concerne donc un procédé de calibration d'au moins un capteur MEMS d'une carte à microcircuits dans un dispositif électronique hôte de poche ou portable comportant une interface utilisateur, caractérisé en ce que pour chaque capteur, il comprend l'émission par la carte d'une invite de calibration dudit capteur de la carte via ladite interface utilisateur du dispositif hôte, et en ce qu'une acceptation de ladite invite de calibration reçue par la carte, via ladite interface utilisateur, active un processus de la carte, de calibration dudit capteur, ledit processus de calibration comprenant une phase de mesure et une phase de calibration.

La phase de mesure comprend l'émission par la carte d'au moins un message d'instruction via ladite interface utilisateur, permettant de déterminer une donnée de référence, et au moins une activation du capteur pour obtenir une mesure correspondante. La phase de calibration comprend l'activation d'un algorithme de calibration utilisant la ou les mesures, et la ou les données de référence déterminées. La phase de correction comprend l'activation d'un algorithme de calibration utilisant la ou les mesures, et la ou les données de référence déterminées, pour calculer des données de correction correspondantes.

Selon un aspect de l'invention, un message d'instruction de la phase de mesure est une invitation à entrer une valeur de référence à comparer avec la mesure effectuée par le capteur.

Selon un autre aspect de l'invention, un message d'instruction de la phase de mesure est une invitation à placer le dispositif hôte dans une position de référence, pour la calibration du capteur, pour comparer une ou des mesures du capteur obtenues dans cette position de référence, à une ou des valeurs de référence associées à cette position de référence.

Une fois la ou les mesures acquises, la carte active la phase de calibration, qui déroule un algorithme de calibration utilisant la ou les mesures et la ou les valeurs de référence, pour déterminer la correction à appliquer aux mesures du capteur, et programmer en mémoire non volatile des données de correction correspondantes.

Dans une mise en oeuvre préférée, ledit procédé de calibration est activé à la mise sous tension du dispositif hôte, dans une phase d'initialisation de la carte. Avantageusement, il est activé à la première mise sous tension de la carte avec le dispositif hôte qui la contient.

L'invention concerne aussi une carte à microcircuit(s) à capteur(s) MEMS comprenant des moyens pour proposer une calibration du ou des capteurs MEMS qu'elle contient, utilisant une interface utilisateur du dispositif hôte dans lequel elle est insérée.

D'autres caractéristiques et avantages de l'invention sont détaillés dans la description suivante de modes de réalisation de l'invention, en référence aux dessins annexés, dans lesquels :
- les figures 1a et 1b sont des schémas simplifiés d'un dispositif électronique de poche ou portable hôte d'une carte à microcircuit(s) à capteur à accéléromètre(s) intégré;
- la figure 2 est un synoptique d'une phase d'invite de calibration d'un procédé de calibration selon l'invention;
- les figures 3 et 4 sont des synoptiques d'une phase de mesure d'un procédé de calibration selon l'invention, suivant une première et une deuxième mise en oeuvre;
- la figure 5 est un schéma bloc d'une carte à microcircuit(s) comprenant un capteur à accéléromètre(s) deux axes x et y;
- les figures 6a à 6c illustrent différentes positions de référence d'un dispositif hôte correspondant à un scénario de calibration pour un capteur accéléromètre à deux ou trois axes de mesure;
- les figures 7a et 7b illustrent une variante d'un scénario de calibration d'un capteur à deux ou trois axes de mesure;
- la figure 8 est un synoptique illustrant un schéma d'activation d'un procédé de calibration d'un capteur ou de capteur(s) d'une carte à microcircuit d'un dispositif hôte, selon l'invention.

L'invention concerne un procédé de calibration d'un capteur MEMS intégré d'une carte à microcircuit(s) dans un dispositif électronique hôte de poche ou portable comportant une interface utilisateur.

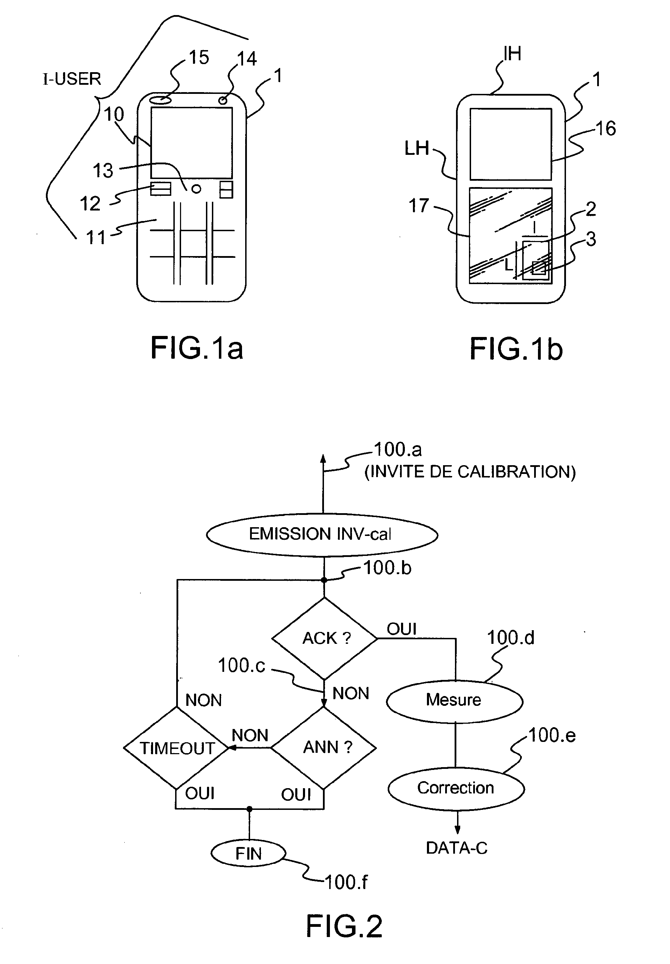

Un dispositif hôte de ce type est par exemple un téléphone portable 1 comme schématiquement représenté sur la figure 1. Ce peut encore être, par exemple, un organiseur PDA (*Personal Digital Assistant*)*,* ou encore une clef USB autoalimentée et à interface utilisateur I-USER. Le terme portable ou de poche est à comprendre à la fois au sens littéral, mais aussi au sens de l'autonomie d'alimentation, ces dispositifs portables et de poche étant munis d'une batterie généralement rechargeable, ou remplaçable. L'interface utilisateur I-USER peut comprendre typiquement différents éléments, notamment des éléments de la liste suivante : écran d'affichage 10, clavier 11, divers boutons 12, touches de directions 13, haut-parleur 14, micro 15, et de manière générale tout élément d'interface utilisateur qui permet de transmettre/recevoir des informations vers un, ou d'un utilisateur.

Le dispositif hôte, par exemple le téléphone portable de la figure 1a, comprend à l'intérieur de son boitier, comme illustré très schématiquement sur la figure 1b, une circuiterie électronique 16 alimentée par une batterie 17, et une carte à microcircuit(s) 2, alimentée par la batterie 17 et connectée à la circuiterie 16 du téléphone via une interface adaptée par laquelle il échange des données.

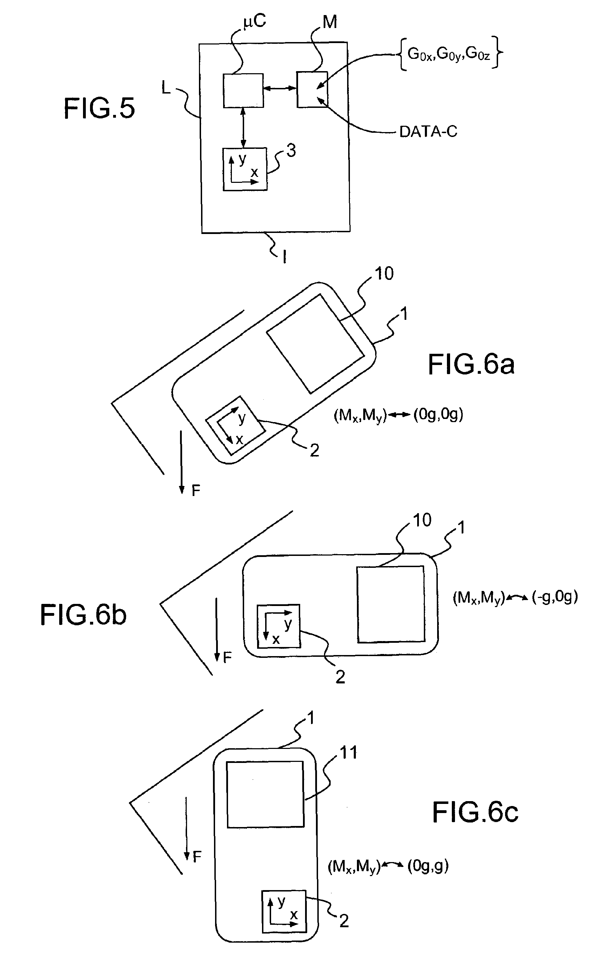

La carte à microcircuit(s) 2 intègre un capteur MEMS 3 à nano ou micro système(s) électromécanique(s), monté à nu dans l'épaisseur de la carte 2. Une carte à microcircuit(s) est une carte dite intelligente, qui comprend de manière bien connue, et comme illustré schématiquement sur la figure 5, au moins un circuit microprocesseur µC associé à une mémoire M. La mémoire comprend typiquement un bloc mémoire non volatile électriquement programmable, ainsi que de la mémoire vive. Dans la suite quand on parle de "carte", on fait référence à l'intelligence µC de la carte qui permet de lancer des applications, et dérouler des programmes, et notamment activer le capteur MEMS 3, lire les mesures en sorties du capteur, et dialoguer avec le dispositif hôte (sous entendu, avec la circuiterie électronique 16 de ce dispositif) typiquement au moyen d'une connexion par contact électrique, par exemple conforme la norme ISO 7816 ou USB.

Le circuit microprocesseur µC et le capteur MEMS 3 sont préférentiellement des circuits distincts, connectés par des pistes conductrices prévues dans l'épaisseur de la carte. En variante, ils peuvent faire partie d'un même circuit intégré.

Le procédé de calibration de l'invention, permet de calibrer le capteur MEMS 3 de la carte à microcircuit(s) alors qu'elle est placée, et opérationnelle, dans un dispositif hôte 1, à interface utilisateur I-USER, afin de corriger les effets des contraintes mécaniques subies jusqu'alors, décrites supra. Ce procédé est basé sur une utilisation judicieuse de cette interface utilisateur, pour inviter un utilisateur à procéder à une calibration d'au moins une caractéristique du capteur. L'utilisateur est ensuite invité par la carte, toujours via cette interface utilisateur, par exemple via l'écran d'affichage ou le haut-parleur, à suivre des instructions pour procéder à une calibration du capteur.

Selon l'invention, et comme illustré sur le synoptique de la figure 2, le procédé comprend une première phase d'invite de calibration à l'initiative de la carte. Cette première phase 100.a comprend l'émission par la carte d'une invite de calibration INV-cal dudit capteur de la carte via ladite interface utilisateur du dispositif hôte. Par exemple, un message s'affiche sur l'écran 11 du dispositif hôte, invitant à accepter la calibration ou à l'annuler. La carte passe alors en phase d'attente de réception 100.b, en provenance de l'interface utilisateur du dispositif hôte, d'une acceptation ACK de cette invite de calibration. En pratique, cette attente est limitée dans le temps, par exemple à quelques dizaines de secondes comptabilisées par un compteur, typiquement une boucle de comptage logiciel 100.c. A l'expiration du compteur, ou sur réception d'une confirmation d'annulation ANN via l'interface utilisateur, la carte met fin au procédé de calibration 100.f. Si la carte reçoit l'acceptation attendue ACK, elle active une phase de mesure 100.d, et une phase de détermination des données de correction 100.e à partir des valeurs de mesure.

La phase de mesure 100.d1 comprend l'émission par la carte d'au moins un message d'instruction via ladite interface utilisateur, permettant de déterminer une ou des données de référence, et au moins une activation du capteur pour obtenir une ou des mesures. La phase de correction 100.e comprend l'activation d'un algorithme de calibration utilisant la ou les mesures, et la ou les valeurs de référence déterminées, pour déterminer des données de correction DATA-C à appliquer aux mesures du capteur. Ces données de correction sont typiquement à programmer en mémoire M de la carte, en mémoire non volatile. En option, ces données de correction sont chargées par la carte en mémoire volatile du capteur à chaque mise sous tension, ou bien en mémoire non volatile du capteur à chaque nouvelle calibration, permettant l'initialisation des registres de réglage interne du capteur.

En variante, le capteur calcule lui-même ces données de correction à partir de la ou des mesures et de la ou des données de référence et mémorise ces données de correction dans la mémoire non volatile du capteur.

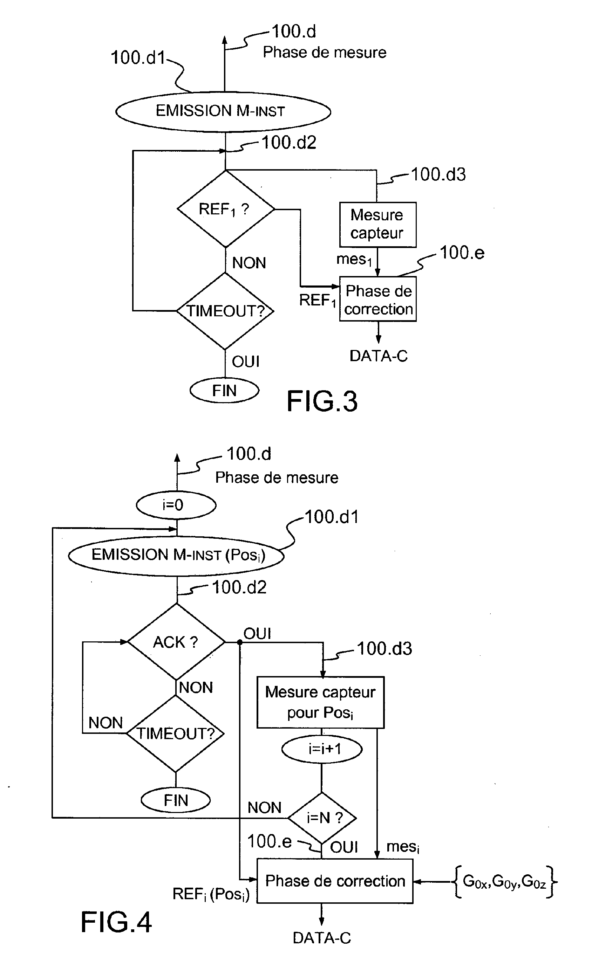

Dans une première mise en oeuvre d'un procédé de calibration selon l'invention illustrée sur le synoptique de la figure 3, la calibration du capteur consiste en une comparaison d'une valeur mesurée par le capteur à une valeur référence, typiquement fournie par un appareil de mesure externe. Cette mise en oeuvre s'applique de manière générale à la calibration de capteurs qui mesurent une grandeur physique liée à l'environnement du dispositif hôte. Elle s'applique par exemple à la calibration d'un capteur de pression. Dans cette mise en oeuvre, le message d'instruction M-INST envoyé dans la phase d'émission 100.d1 est une invitation à entrer une donnée de référence REF₁, qui sera comparée avec la mesure effectuée par le capteur sur requête 100.d3 de la carte. Dans l'exemple, après l'émission 100.d1 du message M-INST, la carte se met en attente 100.d2 de la valeur de référence REF₁, et en parallèle lance la mesure 100.d3 dans le capteur. Elle peut alors passer à la phase de correction 100.e, pour déterminer une donnée de correction DATA-C correspondante, que la carte utilisera ensuite pour corriger les mesures fournies par le capteur.

Dans une autre mise en oeuvre d'un procédé de calibration selon l'invention, un message d'instruction M-INST de la phase de mesure 100.d est une invitation à placer le dispositif hôte dans une position de référence Posᵢ, pour comparer une ou des mesures mesᵢ du capteur obtenues dans cette position de référence, à comparer à une ou des valeurs de référence REFᵢ associée(s) à cette position de référence Posᵢ. Une telle mise en oeuvre s'applique notamment aux capteurs MEMS de mouvements, tels qu'accéléromètres ou inclinomètres.

Après envoi du message d'instruction, la carte se met de préférence en attente 100.d2 d'une confirmation ACK via l'interface utilisateur, indiquant que le dispositif est dans la position Posᵢ demandée, avant d'envoyer une requête de mesure 100.d3 au capteur, et émettre par exemple un message indiquant que la calibration est en cours, typiquement en l'affichant, ou en l'émettant vocalement. Cette phase de mesure peut comprendre plusieurs boucles de mesure, par exemple N, autant que de positions de référence Posᵢ dans lesquelles successivement placer le dispositif. Un exemple sera détaillé ci-après avec deux ou trois positions de référence.

A la place de la confirmation ACK, ou après réception de cette confirmation :
- la carte peut attendre que les valeurs d'accélération mesurées restent stables pendant un temps prédéterminé, par exemple une seconde, et émettre par exemple un message indiquant que la calibration est en cours, typiquement en l'affichant, ou en l'émettant vocalement.
- la carte peut attendre un temps prédéterminé avant d'activer le capteur pour la mesure, par exemple 3 secondes, et indiquer, de préférence afficher, le décompte des secondes avant mesure.

Une fois la ou les mesures Mesᵢ acquises, la carte active la phase de correction 100.e, qui déroule un algorithme de correction utilisant la ou lesdites mesures Mesᵢ et la ou les valeurs de référence REFᵢ, pour déterminer la correction à appliquer aux mesures du capteur, et programmer en mémoire de la carte des données de correction DATA-C correspondantes. Ces données seront utilisées ensuite par la carte pour corriger les mesures fournies par le capteur. Dans une variante déjà évoquée, la carte peut le cas échéant initialiser des registres de réglage internes du capteur avec ces données, à chaque mise sous-tension, de sorte que la correction est appliquée par le capteur lui-même.

A titre d'illustration, le procédé de calibration selon l'invention est expliqué ci-après en prenant en exemple une carte 2 intégrant un capteur MEMS à accéléromètre(s). Ce peut être un accéléromètre ou un inclinomètre. Un capteur à accéléromètre(s) peut comprendre un ou plusieurs accéléromètres (ou un ou plusieurs axes de mesure d'accéléromètre). Quand il comprend plusieurs accéléromètres, ils sont montés en sorte que leurs axes de mesure respectifs soient orthogonaux deux à deux.

Dans un premier exemple illustré sur la figure 5, la carte à microcircuit(s) 2 du dispositif hôte 1 intègre ainsi un capteur du type accéléromètre biaxe (ou à deux accéléromètres), représenté par ses deux axes de mesure x et y. Les axes x et y sont orthogonaux dans le plan de surface S de la carte 2, habituellement rectangulaire. Dans l'exemple l'axe x est parallèle au petit côté I et l'axe y est parallèle au grand côté L de la carte. La carte est positionnée dans le dispositif hôte 1 de manière connue, et invariante (pour les dispositifs hôte de même type). On peut considérer que le dispositif hôte a généralement une surface principale sensiblement plane, représentée ici par le devant du dispositif hôte avec l'écran 10, qui s'inscrit sensiblement dans une forme rectangulaire, définie par un petit côté IH et un grand côté LH (Figures 1a et 1b). Dans l'exemple, la carte 2 est placée dans le dispositif hôte comme indiqué sur la figure 1b, avec sa petite dimension I parallèle au petit côté IH du dispositif hôte 1, et sa grande dimension L parallèle au grand côté LH, et tel que les axes x, et y sont orientés comme indiqué sur la figure 2. Les deux axes x et y sont ainsi disposés orthogonaux dans un plan parallèle au plan de surface de la carte et au plan de surface principale du dispositif hôte.

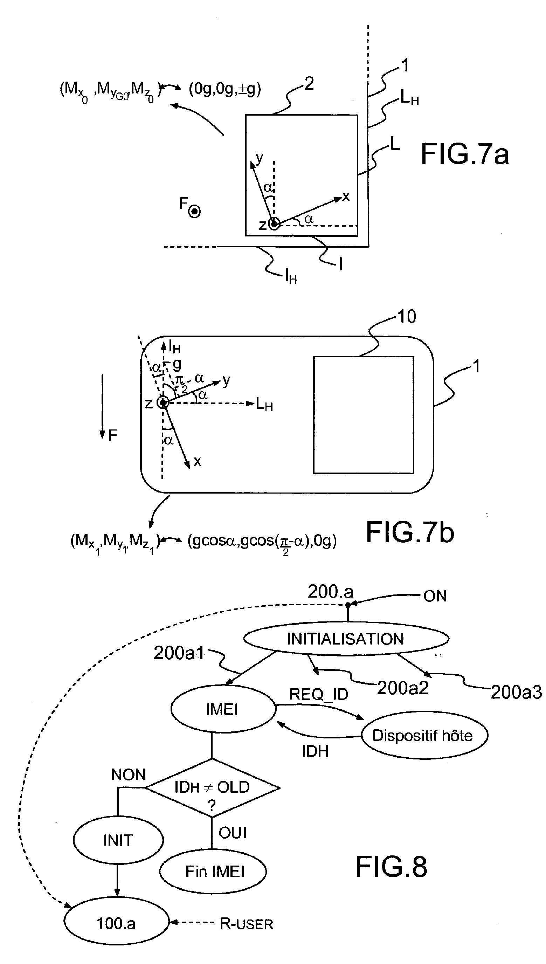

En pratique, une carte à microcircuit(s) sait comment elle est positionnée dans le dispositif hôte dans lequel elle est placée, car de manière bien connue et comme illustré sur la figure 8, à la mise sous-tension (ON), la carte active une procédure d'identification dite IMEI (pour *"International Mobile Equipment Identifier"*)*,* par laquelle la carte émet une requête d'identification REQ_ID vers le dispositif hôte, qui en réponse lui transmet un numéro d'identification IDH. Si ce numéro IDH est nouveau de la carte (IDH≠OLD), la carte, c'est qu'il s'agit d'une première mise sous tension de la carte avec ce dispositif. La carte va alors lancer des opérations spécifiques d'initialisation et/ou de configuration du dispositif hôte. Selon l'invention, la carte utilise cette procédure pour sélectionner un scénario de calibration correspondant à la configuration du capteur relativement au dispositif hôte identifié.

De manière plus détaillée en référence aux figures 1b et 5 où l'axe x, respectivement y, du capteur à calibrer est orienté parallèlement au petit côté IH, respectivement grand côte LH du dispositif hôte, une première position de référence est la position à plat sur une surface horizontale et immobile comme illustré sur la figure 6a. Dans cette position, la surface principale du dispositif hôte est sensiblement horizontale. La carte connaît les valeurs des accélérations correspondantes sur les axes x et y du capteur, dans l'exemple des accélérations nulles (0g), la force gravitationnelle F étant alors orientée verticalement. A la position de référence à plat du dispositif hôte, la carte sait donc associer des valeurs nulles 0g d'accélération, qu'elle peut comparer aux mesures d'accélération Mx sur l'axe x et My sur l'axe y, fournies par le capteur, pour cette position de référence du dispositif hôte. La carte connaît ainsi la valeur de l'offset sur chacun des axes x et y : -Mx et -My.

Pour calibrer également le gain du capteur sur chaque axe, il faut en outre mesurer une accélération non nulle sur chaque axe, pour obtenir un deuxième point de la réponse du capteur. Ceci nécessite dans l'exemple d'utiliser deux autres positions de référence différentes, pour obtenir pour chaque axe, une mesure pour une accélération nulle, une mesure pour une accélération non nulle.

Une deuxième position de référence est illustrée sur la figure 6b, dans laquelle le dispositif est "couché", avec l'écran à droite dans l'exemple : la surface principale du dispositif hôte est sensiblement verticale, faisant face à l'utilisateur (écran 10 en face avant) le dispositif étant disposé sur la tranche, sur sa plus grande dimension LH. La disposition et l'orientation des axes x et y sont alors comme indiqué sur la figure. Dans cette position, la force gravitationnelle F entraine une accélération négative non nulle sur l'axe x, de -g. Avec la mesure effectuée dans la première position de la figure 6a, on dispose alors de deux points de mesure pour l'axe x permettant la détermination du gain Gₓ du capteur pour cet axe, et d'une correction correspondante, par comparaison au gain attendu G₀ₓ pour cet axe, qui est typiquement une des données de personnalisation programmées dans la carte (Fig.5).

Une troisième position de référence est illustrée sur la figure 6c, dans laquelle le dispositif est "debout", face à l'utilisateur : la surface principale du dispositif hôte est sensiblement verticale, faisant face à l'utilisateur (écran 10 en face avant) le dispositif étant disposé sur la tranche, sur sa plus petite dimension LH. Le dispositif hôte 1 est disposé sur la tranche, sur sa plus petite dimension LH. La disposition et l'orientation des axes x et y sont comme indiqué sur la figure. Dans cette position, la force gravitationnelle F entraine une accélération positive non nulle sur l'axe x, +g. Avec la mesure effectuée dans la première position de la figure 6a, on dispose alors de deux points de mesure pour l'axe y permettant la détermination du gain G_{y} du capteur pour cette axe, et d'une correction correspondante, par comparaison au gain attendu G_{0y} pour cet axe, qui est typiquement une des données de personnalisation programmées dans la carte (Fig.5).

En pratique, la carte effectue les mesures dans les différentes positions, puis, quand toutes les mesures sont effectuées, la carte peut déterminer l'offset et le gain sur chaque axe, et déterminer les corrections à effectuer, pour chaque axe de mesure, sur les mesures fournies par le capteur.

On comprend que le scénario de calibration dépend du nombre d'axes de mesure du capteur, de leurs positions dans la carte, et si on veut calibrer seulement l'offset, ou l'offset et le gain.

Notamment, si on a deux axes de mesures x et z, orthogonaux, tel que l'axe z est orthogonal au plan de surface de la carte, et donc au plan de la surface principale du dispositif hôte, deux mesures suffisent, correspondant aux deux positions des figures 6a et 6b, pour mesurer l'offset et le gain sur chaque axe x et z : dans la position de la figure 6a, on a en effet une accélération nulle sur l'axe x, et une accélération de -g sur l'axe z, et dans la position de la figure 6b, on a une accélération nulle sur l'axe z, et une accélération de -g sur l'axe x.

On comprend que pour un accéléromètre trois axes x, y et z, il faut une mesure du capteur dans chacune des trois positions des figures 6a à 6c pour obtenir les deux points de mesure par axe et en déterminer et l'offset et le gain. Si on veut seulement l'offset, deux positions suffiront (Fig.6a et Fig.6b ou Fig.6a et 6c).

Dans un perfectionnement illustré sur les figures 7a et 7b, on prévoit que le capteur de la carte est positionné tel que :
- l'axe de mesure z soit orthogonal au plan de surface de la carte;
- les deux axes x et y sont orthogonaux dans le plan de surface de la carte, chacun faisant un angle prédéterminé α avec un bord correspondant I, L de la carte. Comme la carte sait dans quel dispositif hôte 1 elle est montée, elle connaît l'angle que fait chacun axe x et y avec les dimensions LH et IH du dispositif hôte. Dans l'exemple illustré c'est le même angle α Une telle configuration est intéressante, car elle permet de calibrer chacun des trois axes x, y et z en utilisant uniquement deux positions, en utilisant un transfert de coordonnées entre le repère défini par les dimensions LH et IH et le repère défini par les axes x et y.

Dans l'exemple, la carte connait l'angle α que fait l'axe x, respectivement y, avec l'axe IH, respectivement LH (Fig. 7a).

Quand le dispositif hôte est dans une position verticale, par exemple couché et l'écran à droite comme illustré sur la figure 7b (correspondant à la position de la figure 6b), la composante d'accélération sur chaque axe x et y, due à l'attraction terrestre, est connue par projection, correspondant à un transfert de coordonnées du référentiel (IH, LH) du dispositif hôte, au repère du capteur (X, Y). Sur la figure 7b, la force F gravitationnelle s'applique en négatif suivant IH. L'accélération suivant IH est alors égale à +g. Dans le référentiel (x,y) du capteur, cela correspond a une composante d'accélération égale à gcosα sur x et gcos(π/2-α) sur y. La position de référence horizontale de la figure 7a (ou 6a) donne ainsi des mesures Mx₀, My₀, Mz₀ correspondant pour les axes x et y, à une accélération nulle, et pour l'axe z, à une accélération égale à ±g (selon l'orientation de l'axe z), et la position de référence verticale de la figure 7ba donne des mesures Mx₀, My₀, Mz₀ correspondant pour les axes x et y, à une accélération non nulle gcosα sur x et gcos(π/2-α) sur y, et pour l'axe z, une accélération nulle. La carte peut ainsi déterminer l'offset et le gain, et déterminer la correction de gain pour chaque axe, en fonction des gains attendus G₀ₓ, G_{0y}, G_{0z}.

Ainsi, la phase de calibration d'un capteur, peut utiliser différents scénarios de calibration caractérisés par une ou des positions de référence et une ou des valeurs de référence associées. Notamment pour un capteur à accéléromètre(s) les valeurs de référence associées aux positions de référence correspondent aux valeurs de l'accélération due à la gravitation sur chacun des axes de mesure, dans le repère formé par les axes du capteur.

En pratique, les indications données à l'utilisateur pour positionner le dispositif hôte comprennent l'orientation du dispositif hôte, par exemple, en précisant la position d'un élément caractéristique tel que dispositif positionné debout, écran d'affichage face à vous, dispositif couché, écran face à vous et à droite...).

Si la carte comprend plusieurs capteurs, par exemple un capteur de pression, et un capteur à accéléromètre(s), le procédé de calibration activera successivement les scénarios de calibration correspondants.

Selon un autre aspect de l'invention, et comme illustré sur la figure 8, un procédé de calibration selon l'invention est activé par la carte 2 dans le dispositif hôte 1, sur détection d'un évènement externe, par exemple, une mise sous tension (ON) du dispositif hôte. Lorsque le dispositif hôte est mis sous tension, la carte est aussi mise sous tension, ce qui déclenche une procédure d'initialisation 200.a. Cette procédure d'initialisation interne de la carte déclenchement peut par exemple activer le procédé de calibration du capteur de la carte.

De préférence, le procédé de calibration est déclenché à la première mise sous tension de la carte 2 avec le dispositif hôte 1 qui l'a contient. Cette première mise sous tension est détectée par la carte, dans une procédure d'identification dite IMEI, car comme indiqué précédemment le dispositif hôte va transmettre son numéro d'identification IDH, qui sera nouveau pour la carte. Cet évènement est particulièrement intéressant pour déclencher un procédé de calibration selon l'invention, car on peut en effet estimer qu'une fois la carte insérée et bloquée dans un dispositif hôte, le capteur de la carte est protégé des contraintes mécaniques comme il le serait dans un boitier d'encapsulation. Un procédé de calibration conduit à ce moment privilégié, permet ainsi de corriger toutes les contraintes mécaniques exercées depuis la mise à disposition de la carte jusqu'à son intégration dans le dispositif hôte. Ensuite, à chaque fois que l'utilisateur change de matériel, et que la carte est enlevée de son dispositif hôte pour être placée dans un nouveau, la carte détectera le changement de matériel (nouveau numéro IDH) et déclenchera une nouvelle procédure de calibration, qui permettra de corriger les nouvelles contraintes mécaniques liées à ce changement de matériel. Ce moment est privilégié, car d'une part il est facile à détecter par la carte, lié à la procédure d'identification du dispositif hôte, qu'il n'intervient qu'une fois, à la première mise sous tension de la carte avec ce dispositif, qu'il corrige a priori toutes les contraintes mécaniques exercées depuis la dernière calibration du capteur, et qu'il s'intègre naturellement dans un processus d'initialisation qui sera ainsi perçu par l'utilisateur comme une étape naturelle de mise en place.

Dans une option supplémentaire, on peut prévoir que le procédé de calibration peut être aussi déclenché sur requête de l'utilisateur, R-USER, via l'interface utilisateur, correspondant à une fonctionnalité offerte par la carte.

L'invention ne se limite pas aux exemples de mise en oeuvre décrits et illustrés. Elle s'étend à la calibration en opérationnel, dans le dispositif hôte, de tous capteurs MEMS d'une carte à microcircuit(s) nécessitant une calibration, notamment une calibration d'un offset et/ou d'un gain.

## Revendications

1. Procédé de calibration d'au moins un capteur MEMS (3) d'une carte à microcircuit(s) (2) dans un dispositif électronique hôte (1) de poche ou portable comportant une interface utilisateur (I-USER), **caractérisé en ce que** pour chaque capteur à calibrer, il comprend une phase d'émission (100.a) par la carte d'une invite de calibration (INV-cal) dudit capteur de la carte via ladite interface utilisateur du dispositif hôte, et **en ce qu'**une acceptation de ladite invite de calibration reçue par la carte, via ladite interface utilisateur, active dans la carte un processus de calibration dudit capteur, ledit processus de calibration comprenant une phase de mesure (100.d) suivie d'une phase de correction (100.e) pour calculer des données de correction correspondantes (DATA-C).

2. Procédé de calibration d'un capteur suivant la revendication 1, dans lequel la phase de mesure comprend l'émission (100.d1) par la carte d'au moins un message d'instruction (M-INST) via ladite interface utilisateur, permettant de déterminer au moins une donnée de référence (REFᵢ), et au moins une activation (100-d3) du capteur pour obtenir une mesure correspondante (mesᵢ), et la phase de correction (100.e) comprend l'activation d'un algorithme de calibration utilisant la ou les mesures (mesᵢ), et la ou les données de référence déterminées (REFᵢ), pour calculer des données de correction correspondantes (DATA-C).

3. Procédé de calibration d'un capteur suivant la revendication 2, dans lequel un message d'instruction (M-INST) de la phase de mesure est une invitation à entrer une valeur de référence (REF₁), à comparer dans la phase de correction, avec une mesure (mes₁) effectuée par le capteur.

4. Procédé de calibration suivant la revendication 2, dans lequel un message d'instruction (M-INST) de la phase de mesure est une invitation à placer le dispositif hôte dans une position de référence (Posᵢ), pour la calibration du capteur, pour comparer une ou des mesures (mesᵢ) du capteur obtenues dans cette position de référence, à une ou des valeurs de référence (REFi) correspondant à cette position de référence (Posᵢ).

5. Procédé de calibration suivant la revendication 4, dans lequel après envoi du message d'instruction (M-INST), la carte se met en attente (100.d2) d'une confirmation ACK via l'interface utilisateur, que le dispositif est dans la position Posᵢ demandée, et émet via l'interface utilisateur un message indiquant que la calibration est en cours.

6. Procédé de calibration selon la revendication 4 ou 5, dans lequel la carte attend que les mesures fournies en sortie du capteur restent stables pendant un temps prédéterminé, et émet via l'interface utilisateur un message indiquant que la calibration est en cours.

7. Procédé de calibration selon la revendication 4 ou 5, dans lequel la carte attend un temps prédéterminé avant d'effectuer la ou les mesures, et indique via l'interface utilisateur, le décompte des secondes avant mesure.

8. Procédé de calibration selon l'une quelconque des revendications 4 à 7, appliqué à un capteur à accéléromètre(s) à un ou plusieurs axes de mesure (x, y, z), dans lequel une ou des valeurs de référence (REFᵢ) associées à une position de référence (Posᵢ) sont les valeurs connues de l'accélération due à la force gravitationnelle sur le ou les axes de mesure dans ladite position de référence du dispositif hôte.

9. Procédé de calibration selon la revendication 8, dans lequel l'algorithme de correction détermine les données de correction (DATA-C) pour chaque axe (x, y, z) à partir des valeurs de référence, des mesures, et de données usine de sensibilité (G₀ₓ, G_{y}, G_{0z}) du capteur.

10. Procédé de calibration selon la revendication 8 ou 9, dans lequel la phase de mesure utilise au moins deux positions de référence dans lesquelles placer successivement ledit dispositif hôte, une première dans laquelle une surface principale du dispositif hôte est disposée sensiblement à plat à l'horizontale, une deuxième dans laquelle cette surface est disposée sensiblement verticale.

11. Procédé de calibration selon la revendication 10, pour un capteur à deux (x, y) ou trois axes (x, y ,z), dont deux axes orthogonaux dans un plan parallèle au dit plan de surface principal du dispositif hôte, ledit dispositif hôte s'inscrivant sensiblement dans une forme rectangulaire définie par un grand côté (LH) et un petit côté (IH), dans lequel lesdits deux axes orthogonaux du capteur sont disposés dans la carte de manière à ce que dans le dispositif hôte, chacun fait un angle déterminé (α), l'un avec ledit grand côté, et l'autre avec ledit petit côté, avec ladite phase de mesure utilise seulement ces deux positions de référence, ladite phase de correction intégrant un transfert de coordonnées entre le référentiel défini par lesdits petit et grand côté du dispositif hôte et le référentiel défini par lesdits deux axes orthogonaux.

12. Procédé de calibration selon l'une quelconque des revendications précédentes, **caractérisé en ce que** ledit procédé de calibration est activé à la mise sous tension (ON) du dispositif hôte, dans une phase d'initialisation (200.a) de la carte.

13. Procédé de calibration selon la revendication 12, dans lequel ledit procédé de calibration n'est activé qu'à la première mise sous tension de la carte avec le dispositif hôte qui l'a contient.

14. Procédé de calibration selon la revendication 12 ou 13, dans lequel le procédé de calibration peut en outre être activé sur requête d'un utilisateur du dispositif hôte.

15. Dispositif électronique portable ou de poche 1 intégrant une carte à microcircuit(s) (2) à capteur(s) MEMS (3), **caractérisé en ce que** la carte comprend des moyens pour proposer une calibration du ou des capteurs MEMS (3) qu'elle contient, utilisant une interface utilisateur (I-USER) du dispositif hôte dans lequel elle est insérée, permettant l'émission d'une invite de calibration sur l'interface utilisateur (I-USER) et l'activation d'un processus de calibration de capteur(s) selon l'une quelconque des revendications précédentes.

16. Carte à microcircuit(s) (2) à capteur(s) MEMS (3) destinée à être insérée dans un dispositif électronique hôte (1) de poche ou portable **caractérisée en ce qu'**elle comprend des moyens pour proposer une calibration du ou des capteurs MEMS (3) qu'elle contient, utilisant une interface utilisateur (I-USER) du dispositif hôte dans lequel elle est insérée.

## Patentansprüche

1. Verfahren zum Kalibrieren wenigstens eines MEMS-Sensors (3) einer Mikroschaltplatte (2) in einem elektronischen Taschen- oder tragbaren Host-Gerät (1), das eine Benutzeroberfläche (I-USER) umfasst, **dadurch gekennzeichnet, dass** es für jeden zu kalibrierenden Sensor eine Übertragungsphase (100.a) beinhaltet, in der die Platte eine Einladung zum Kalibrieren (INV-cal) des Sensors der Karte über die Benutzeroberfläche des Host-Gerätes sendet, und dadurch, dass eine Annahme der von der Karte empfangenen Kalibrierungseinladung über die Benutzeroberfläche einen Vorgang des Kalibrierens des Sensors in der Karte aktiviert, wobei der Kalibrierungsvorgang eine Messphase (100.d), gefolgt von einer Korrekturphase (100.e) zum Berechnen der entsprechenden Korrekturdaten (DATA-C) beinhaltet.

2. Verfahren zum Kalibrieren eines Sensors nach Anspruch 1, wobei die Messphase das Übertragen (100.d1) von wenigstens einer Anweisungsnachricht (M-INST) über die Benutzeroberfläche durch die Platte, so dass wenigstens ein Referenzdatenelement (REFᵢ) bestimmt werden kann, und wenigstens eine Aktivierung (100-d3) des Sensors beinhaltet, um einen entsprechenden Messwert (mesᵢ) zu erhalten, und die Korrekturphase (100.e) die Aktivierung eines Kalibrierungsalgorithmus unter Verwendung der ein oder mehreren Messwerte (mesᵢ) und der ein oder mehreren ermittelten Referenzdatenelemente (REFᵢ) beinhaltet, um entsprechende Korrekturdaten (DATA-C) zu berechnen.

3. Verfahren zum Kalibrieren eines Sensors nach Anspruch 2, wobei eine Anweisungsnachricht (M-INST) der Messphase eine Einladung zum Eingeben eines mit der Korrekturphase zu vergleichenden Referenzwertes (REF₁) mit einer von dem Sensor durchgeführten Messung (mes₁) ist.

4. Kalibrierungsverfahren nach Anspruch 2, wobei eine Anweisungsnachricht (M-INST) der Messphase eine Einladung zum Setzen des Host-Gerätes in eine Referenzposition (Posᵢ) für die Kalibrierung des Sensors ist, um einen oder mehrere in der Referenzposition erhaltene Messwerte (mesᵢ) des Sensors mit einem oder mehreren der Referenzposition (Posᵢ) entsprechenden Referenzwerten (REFi) zu vergleichen.

5. Kalibrierungsverfahren nach Anspruch 4, wobei die Platte nach dem Senden der Anweisungsnachricht (M-INST) auf eine ACK-Bestätigung über die Benutzeroberfläche wartet (100.d2), dass das Gerät in der angeforderten Position Posᵢ ist, und eine Nachricht über die Benutzeroberfläche sendet, die anzeigt, dass die Kalibrierung abläuft.

6. Kalibrierungsverfahren nach Anspruch 4 oder 5, wobei die Platte wartet, bis die am Ausgang vom Sensor zugeführten Messwerte für eine vorbestimmte Zeit stabil bleiben, und eine Nachricht über die Benutzeroberfläche sendet, die anzeigt, dass die Kalibrierung abläuft.

7. Kalibrierungsverfahren nach Anspruch 4 oder 5, wobei die Platte für eine vorbestimmte Zeit wartet, bevor sie die ein oder mehreren Messungen durchführt, und über die Benutzeroberfläche die bis zum Messen verbleibenden Sekunden anzeigt.

8. Kalibrierungsverfahren nach einem der Ansprüche 4 bis 7, angewandt auf (einen) Beschleunigungsmesssensor(en) mit einer oder mehreren Messachsen (x, y, z), wobei eine oder mehrere mit einer Referenzposition (Posᵢ) assoziierte Referenzwerte (REFᵢ) die bekannten Werte der Beschleunigung aufgrund der Schwerkraft auf den ein oder mehreren Messachsen in der Referenzposition des Host-Gerätes sind.

9. Kalibrierungsverfahren nach Anspruch 8, wobei der Korrekturalgorithmus die Korrekturdaten (DATA-C) für jede Achse (x, y, z) auf der Basis von Referenzwerten, Messwerten und Empfindlichkeitswerksdaten (G₀ₓ, G_{y}, G_{0z}) des Sensors ermittelt.

10. Kalibrierungsverfahren nach Anspruch 8 oder 9, wobei die Messphase wenigstens zwei Referenzpositionen benutzt, in die das Host-Gerät nacheinander gesetzt wird, eine erste, in der eine Hauptfläche des Host-Gerätes im Wesentlichen flach in der Horizontalen angeordnet ist, eine zweite, in der die Oberfläche im Wesentlichen vertikal angeordnet ist.

11. Kalibrierungsverfahren nach Anspruch 10 für einen Sensor mit zwei (x, y) oder drei (x, y, z) Achsen, von denen zwei Achsen orthogonal in einer Ebene parallel zur Hauptflächenebene des Host-Gerätes sind, wobei das Host-Gerät im Wesentlichen in eine rechteckige Form passt, die durch eine große Seite (LH) und eine kleine Seite (IH) definiert wird, wobei die zwei orthogonalen Achsen des Sensors so in der Platte angeordnet sind, dass in dem Host-Gerät jede einen bestimmten Winkel (α) bildet, einen mit der großen Seite und den anderen mit der kleinen Seite, wobei die Messphase nur diese beiden Referenzpositionen benutzt, wobei die Korrekturphase eine Übertragung von Koordinaten zwischen der durch die kleine und große Seite des Host-Gerätes definierten Referenz und der durch die zwei orthogonalen Achsen definierten Referenz integriert.

12. Kalibrierungsverfahren nach einem der vorherigen Ansprüche, **dadurch gekennzeichnet, dass** das Kalibrierungsverfahren beim Einschalten (ON) des Host-Gerätes während einer Initialisierungsphase (200.a) der Platte aktiviert wird.

13. Kalibrierungsverfahren nach Anspruch 12, wobei das Kalibrierungsverfahren nur beim ersten Einschalten der Platte mit dem Host-Gerät, das sie enthält, aktiviert wird.

14. Kalibrierungsverfahren nach Anspruch 12 oder 13, wobei das Kalibrierungsverfahren auch auf Anforderung eines Benutzers des Host-Gerätes aktiviert werden kann.

15. Elektronisches tragbares oder Taschengerät (1), in dem eine Mikroschaltplatte (2) mit (einem) MEMS-Sensor(en) (3) integriert ist, **dadurch gekennzeichnet, dass** die Platte Mittel zum Vorschlagen einer Kalibrierung der ein oder mehreren MEMS-Sensoren (3) unter Verwendung einer Benutzeroberfläche (I-USER) des Host-Gerätes umfasst, in dem sie enthalten ist, so dass eine Kalibrierungseinladung auf der Benutzeroberfläche (I-USER) und die Aktivierung eines Prozesses zum Kalibrieren von Sensoren nach einem der vorherigen Ansprüche übertragen werden kann.

16. Mikroschaltplatte (2) mit (einem) MEMS-Sensor(en) (3) zum Einfügen in ein elektronisches Taschen- oder tragbares Host-Gerät (1), **dadurch gekennzeichnet, dass** sie Mittel zum Vorschlagen einer Kalibrierung von einem oder mehreren MEMS-Sensoren (3) beinhaltet, die darin enthalten sind, mit einer Benutzeroberfläche (I-USER) des Host-Gerätes, in das sie eingeführt ist.

## Claims

1. The method for calibrating at least one MEMS sensor (3) of a microcircuit(s) board (2) in a pocket or portable electronic host device (1) comprising a user interface (I-USER), **characterised in that** for each sensor to be calibrated it comprises a transmission phase (100.a) during which the board sends an invitation for the calibration (INV-cal) of said sensor of the board via said user interface of the host device, and **in that** an acceptance of said calibration invitation received by said board, via said user interface, activates a process for calibrating said sensor within said board, said calibration process comprising a measurement phase (100.d) followed by a correction phase (100.e) for calculating corresponding correction data (DATA-C).

2. The method for calibrating a sensor according to claim 1, wherein the measurement phase comprises the transmission (100.d1) by the board of at least one instruction message (M-INST) via said user interface, allowing at least one item of reference data (REFᵢ) to be determined, and at least one activation (100-d3) of the sensor so as to obtain a corresponding measurement (mesᵢ), and the correction phase (100.e) comprises the activation of a calibration algorithm using the one or more measurements (mesᵢ), and the one or more determined items of reference data (REFᵢ), in order to calculate corresponding correction data (DATA-C).

3. The method for calibrating a sensor according to claim 2, wherein an instruction message (M-INST) of the measurement phase is an invitation to enter a reference value (REF₁), to be compared in the correction phase, with a measurement (mes₁) carried out by said sensor.

4. The calibration method according to claim 2, wherein an instruction message (M-INST) of the measurement phase is an invitation to place the host device into a reference position (Posᵢ), for the calibration of the sensor, for comparing one or more measurements (mesᵢ) of the sensor obtained in said reference position, with one or more reference values (REFi) corresponding to said reference position (Posᵢ).

5. The calibration method according to claim 4, wherein after sending the instruction message (M-INST), the board awaits (100.d2) an ACK confirmation, via the user interface, that the device is in the requested position Posᵢ and transmits a message via the user interface indicating that the calibration is on-going.

6. The calibration method according to claim 4 or 5, wherein the board waits until the measurements supplied as output from the sensor remain stable for a predetermined period, and transmits a message via the user interface indicating that the calibration is on-going.

7. The calibration method according to claim 4 or 5, wherein the board waits for a predetermined period before carrying out the one or more measurements, and indicates, via the user interface, the countdown of seconds before measurement.

8. The calibration method according to any one of claims 4 to 7, applied to an accelerometer(s) sensor with one or more measurement axes (x, y, z), wherein one or more reference values (REFᵢ) associated with a reference position (Posᵢ) are the known values of the acceleration due to the gravitational force on the one or more measurement axes in said reference position of the host device.

9. The calibration method according to claim 8, wherein the correction algorithm determines the correction data (DATA-C) for each axis (x, y, z) on the basis of reference values, measurements and factory data (G₀ₓ, G_{y}, G_{0z}) relating to the sensitivity of the sensor.

10. The calibration method according to claim 8 or 9, wherein the measurement phase uses at least two reference positions in which said host device is successively placed, a first in which a main surface of the host device is disposed substantially flat in the horizontal, a second in which said surface is disposed substantially vertical.

11. The calibration method according to claim 10, for a sensor with two (x, y) or three (x, y, z) axes, two axes of which are orthogonal in a plane parallel to said main surface plane of the host device, with said host device being substantially included in a rectangular shape defined by a large side (LH) and a small side (1H), in which said two orthogonal axes of the sensor are disposed in the board so that in the host device each forms a determined angle (α), one with said large side and the other with said small side, with said measurement phase only using these two reference positions, said correction phase integrating a transfer of coordinates between the reference defined by said small and large sides of the host device and the reference defined by said two orthogonal axes.

12. The calibration method according to any one of the preceding claims, **characterised in that** said calibration method is activated on power-up (ON) of the host device, during a phase (200.a) for initialising the board.

13. The calibration method according to claim 12, wherein said calibration method is only activated upon the first power-up of the board with the host device that contains it.

14. The calibration method according to claim 12 or 13, wherein the calibration method can also be activated on the request of a user of the host device.

15. A portable or pocket electronic device 1 integrating a microcircuit(s) board (2) with an MEMS sensor(s) (3), **characterised in that** the board comprises means for proposing a calibration of the one or more MEMS sensors (3) that it contains, using a user interface (I-USER) of the host device in which it is contained, allowing a calibration invitation to be transmitted on the user interface (I-USER) and the activation of a process for calibrating sensors according to any one of the preceding claims.

16. A microcircuit(s) board (2) with MEMS sensor(s) (3) designed to be inserted in a pocket or portable host electronic device (1), **characterised in that** it comprises means for proposing a calibration of one or more MEMS sensors (3) that it contains, using a user interface (I-USER) of the host device in which it is inserted.
